# EUROPÄISCHE PATENTSCHRIFT

(11) **EP 2 676 824 B1**
(45) Veröffentlichungstag und Bekanntmachung des Hinweises auf die Patenterteilung: **28.03.2018**
(21) Anmeldenummer: 13170207.8
(22) Anmeldetag: 03.06.2013
(51) Int. Cl.: B60J 5/06, B60J 7/16

(54) **Aufbau zum Befördern von Gütern**
Superstructure for conveying goods
Structure pour le transports de biens

(30) Priorität: 20.06.2012 DE 102012210411
(43) Veröffentlichungstag der Anmeldung: 25.12.2013
(73) Patentinhaber: Fahrzeugbau Heinz Böse GmbH, 59889 Eslohe-Reiste (DE)
(72) Erfinder: Böse, Maximilian, 59889 Eslohe Reiste (DE)
(74) Vertreter: Linnemann, Winfried

(56) Entgegenhaltungen:
- EP-A1- 0 159 206
- EP-A1- 0 741 070
- EP-A2- 2 218 600
- WO-A1-2010/116155
- BE-A6- 1 014 757
- JP-U- S60 135 221
- JP-U- S61 101 028
- US-A- 1 405 485

## Beschreibung

Die Erfindung betrifft einen Aufbau zum Befördern von Gütern, insbesondere für einen Lastkraftwagen, einen Anhänger, einen Absetzcontainer, eine Wechselbrücke, einen Sattelauflieger oder dergleichen, aufweisend wenigstens eine seitliche Verladeöffnung und eine faltbare Seitenwand, wobei die faltbare Seitenwand zumindest an einer im oberen Bereich der seitlichen Verladeöffnung angeordneten oberen Schiene zwischen einer vollständig entfalteten Stellung und einer vollständig gefalteten Stellung bewegbar gelagert ist, wobei sich die Verladeöffnung und die obere Schiene zumindest bis an ein seitliches Ende des Aufbaus erstrecken, wobei eine obere Verlängerungsschiene vorhanden ist, die derart schwenkbeweglich an dem seitlichen Ende des Aufbaus angeordnet ist, dass sie die obere Schiene an dem seitlichen Ende des Aufbaus verlängernd und fluchtend mit der oberen Schiene ausgerichtet werden kann, und wobei die Länge der oberen Verlängerungsschiene zumindest der Breite der faltbaren Seitenwand in ihrer vollständig oder nahezu vollständig gefalteten Stellung entspricht.

Bei herkömmlichen Aufbauten zum Befördern von Gütern der vorgenannten Art besteht das Problem, dass die faltbare Seitenwand in ihrer vollständig gefalteten Stellung einen Teil der Verladeöffnung bedeckt und somit nicht die gesamte Verladeöffnung zum Ein- und Ausladen von Gütern zugänglich ist. Es ist bei den herkömmlichen Aufbauten daher erforderlich, die in ihrer vollständig gefalteten Stellung befindliche faltbare Seitenwand während eines Verladevorgangs relativ zur Verladeöffnung an unterschiedlichen Stellen zu positionieren. Hierdurch wird die Handhabung der herkömmlichen Aufbauten umständlich, wodurch zudem der Zeitaufwand für einen Verladevorgang nachteilig erhöht wird.

Um diese Problematik zu umgehen, muss die in ihrer vollständig gefalteten Stellung befindliche faltbare Seitenwand vollständig aus dem Bereich der Verladeöffnung entfernbar sein. Dieser Lösungsansatz ist beispielsweise aus der EP 0 159 206 A1 bekannt. Dieses Dokument zeigt einen Aufbau mit den eingangs genannten Merkmalen. Die obere Verlängerungsschiene ist dabei um eine horizontale, entlang einer oberen Kante einer Stirnwand des Aufbaus verlaufende Achse zwischen ihrer die obere Schiene verlängernden Einsatzstellung und einer Ruhestellung, in der sie auf dem Aufbaudach liegt, verschwenkbar. Als nachteilig wird bei diesem bekannten Aufbau angesehen, dass die faltbare Seitenwand in ihrer Öffnungsstellung nur an ihrem oberen Rand von der Verlängerungsschiene gehalten ist, was die Handhabung der Seitenwand erschwert.

Aus der US 1 405 485 A ist ein Aufbau eines Güterwaggons bekannt, der wenigstens eine seitliche Verladeöffnung und eine faltbare Seitenwand aufweist, wobei die faltbare Seitenwand zumindest an einer im oberen Bereich der seitlichen Verladeöffnung angeordneten oberen Schiene zwischen einer vollständig entfalteten Stellung und einer vollständig gefalteten Stellung bewegbar gelagert ist. Dabei ist an wenigstens einem seitlichen Randbereich der Verladeöffnung eine Schwenkeinrichtung zum Verschwenken der faltbaren Seitenwand in ihrer vollständig oder nahezu vollständig gefalteten Stellung angeordnet, wobei die Schwenkeinrichtung derart ausgebildet ist, dass in ihrer vollständig oder nahezu vollständig gefalteten Stellung die Seitenwand sich auf einem schwenkbaren Schienenabschnitt der Schiene befindet und zur vollständigen Freigabe der Verladeöffnung mit dem Schienenabschnitt um eine vertikale Schwenkachse aus der Ebene der Verladeöffnung heraus in eine Position außerhalb des Aufbaus verschwenkbar ist.

Aufgabe der Erfindung ist es, eine neuartige, konstruktiv sehr robuste und einfach handhabbare Möglichkeit zu schaffen, die faltbare Seitenwand eines Aufbaus für die Durchführung eines Verladevorgangs aus dem Bereich der Verladeöffnung zu entfernen.

Die Aufgabe wird bei einem Aufbau der eingangs genannten Art erfindungsgemäß dadurch gelöst, dass im unteren Bereich der Verladeöffnung eine untere Schiene angeordnet ist, an der die faltbare Seitenwand zwischen der vollständig entfalteten Stellung und der vollständig gefalteten Stellung bewegbar gelagert ist, wobei eine untere Verlängerungsschiene vorhanden ist, die derart schwenkbeweglich an dem seitlichen Ende des Aufbaus angeordnet ist, dass sie die untere Schiene an dem seitlichen Ende des Aufbaus verlängernd und fluchtend mit der unteren Schiene ausgerichtet werden kann, wobei die Länge der unteren Verlängerungsschiene zumindest der Breite der faltbaren Seitenwand in ihrer vollständig oder nahezu vollständig gefalteten Stellung entspricht, und dass die dem seitlichen Ende des Aufbaus abgewandten Endabschnitte der oberen Verlängerungsschiene und der unteren Verlängerungsschiene über ein vertikal ausgerichtetes Stabilisierungselement miteinander verbunden sind.

Hierdurch wird eine robuste Einheit aus oberer Verlängerungsschiene, unterer Verlängerungsschiene und Stabilisierungselement gebildet, wodurch zudem die Handhabung der Verlängerungsschienen vereinfacht wird. Auch wenn die faltbare Seitenwand aus dem Bereich der Verladeöffnung heraus bewegt ist, ist sie sowohl an ihrer oberen Seite als auch an ihrer unteren Seite in den Verlängerungsschienen geführt. Insgesamt wird hierdurch die Handhabung der faltbaren Seitenwand bei einem Ladevorgang vereinfacht.

Zum Öffnen kann die faltbare Seitenwand an wenigstens einem seitlichen Ende der Verladeöffnung geradlinig über die Verladeöffnung hinaus bewegt werden. Die obere und untere Verlängerungsschiene sind schwenkbeweglich an dem Aufbau angelenkt und können somit auf einfache Art und Weise an der jeweiligen Ladestelle in ihre funktionsgemäße Stellung überführt werden, in der sie die obere und untere Schiene verlängern und jeweils fluchtend mit diesen angeordnet sind.

Nach einer vorteilhaften Ausgestaltung der Erfindung sind die obere Verlängerungsschiene und die untere Verlängerungsschiene um eine vertikale Schwenkachse schwenkbar an dem seitlichen Ende des Aufbaus angeordnet. Die Verlängerungsschienen können hierdurch beispielsweise von einer zur Vorderseite oder Rückseite des Aufbaus parallelen Stellung in ihre funktionsgemäße Stellung unter sehr geringem Kraftaufwand überführt werden.

Eine weitere vorteilhafte Ausgestaltung der Erfindung sieht vor, dass die obere Verlängerungsschiene und die untere Verlängerungsschiene um die vertikale Schwenkachse schwenkbar mit einer an dem seitlichen Ende des Aufbaus angeordneten Ecksäule des Aufbaus verbunden sind. Es werden hierdurch bereits am Aufbau vorhandene Komponenten zur Realisierung der Erfindung verwendet, so dass diese mit einer möglichst geringen Erhöhung des Gewichts eines entsprechend ausgebildeten Aufbaus verbunden ist.

Gemäß einer weiteren vorteilhaften Ausgestaltung der Erfindung weist der Aufbau Mittel zum Sichern der funktionsgemäßen Stellung der oberen Verlängerungsschiene, in der sie die obere Schiene an dem seitlichen Ende des Aufbaus verlängernd und fluchtend mit der oberen Schiene ausgerichtet ist, und/oder Mittel zum Sichern der funktionsgemäßen Stellung der unteren Verlängerungsschiene, in der diese die untere Schiene an dem seitlichen Ende des Aufbaus verlängernd und fluchtend mit der unteren Schiene ausgerichtet ist, auf. Dies vereinfacht die Handhabung der Verlängerungsschienen und ermöglicht zuverlässig eine sehr einfache Handhabung der faltbaren Seitenwand.

Nach einer weiteren vorteilhaften Ausgestaltung der Erfindung sind die obere Verlängerungsschiene und die untere Verlängerungsschiene derart schwenkbeweglich an dem seitlichen Ende des Aufbaus angeordnet, dass sie in eine zu der weiteren, an das seitliche Ende des Aufbaus angrenzenden Seitenwand parallele Ruhestellung bewegbar sind, wobei der Aufbau Mittel zum Sichern der Ruhestellung der oberen Verlängerungsschiene und/oder der unteren Verlängerungsschiene aufweist, in der sie parallel zu der weiteren, an das seitliche Ende des Aufbaus angrenzenden Seitenwand ausgerichtet sind. Hierdurch lassen sich die obere und untere Verlängerungsschiene in ihrer Ruhestellung platzsparend an dem Aufbau anordnen, ohne dessen Dimensionen unerwünscht zu vergrößern, und es kann verhindert werden, dass die Verlängerungsschienen unbeabsichtigt, beispielsweise während des Fahrbetriebs eines entsprechend ausgestatteten Fahrzeugs, verschwenkt werden.

Eine weitere vorteilhafte Ausgestaltung der Erfindung sieht vor, dass der Aufbau Mittel zum Sichern der vollständig oder nahezu vollständig gefalteten Stellung der an der oberen und der unteren Verlängerungsschiene gehaltenen faltbaren Seitenwand aufweist. Hierdurch kann verhindert werden, dass sich die faltbare Seitenwand nach ihrem vollständigen oder nahezu vollständigen Falten und ihrem Anordnen an den Verlängerungsschienen wieder entfaltet und dadurch in den Bereich der Verladeöffnung gelangt, was gerade verhindert werden soll.

Die faltbare Seitenwand kann formstabile Faltelemente aufweisen, die an der oberen und unteren Schiene bewegbar angeordnet und um vertikale Schwenkachsen schwenkbeweglich miteinander verbunden sind. Es besteht die Möglichkeit, die faltbare Seitenwand des Aufbaus allein durch gelenkig miteinander verbundene Faltelemente auszubilden, ohne dass zudem eine Plane vorhanden sein muss. Eine solche faltbare Seitenwand lässt sich schnell und einfach von ihrer entfalteten Stellung in ihre vollständig oder nahezu vollständig gefalteten Stellung überführen oder umgekehrt.

Die faltbare Seitenwand kann eine Plane aufweisen, welche an der oberen Schiene oder an den Faltelementen aufgehängt ist. Hiernach kann zusätzlich zu den Faltelementen eine Plane vorhanden sein, falls gewünscht. Auch die Aufhängung der Plane kann gemäß den jeweiligen Anforderungen und Wünschen variiert werden.

Weiter kann die faltbare Seitenwand durch eine Plane gebildet sein, die an der oberen und unteren Schiene bewegbar angeordnet ist. Hiernach kann auf die Anordnung von formstabilen Faltelementen verzichtet werden. Es wird lediglich eine sich auf gewünschte Art und Weise faltende Plane an der oberen und unteren Schiene geführt.

An der Plane können Versteifungselemente angeordnet sein. Diese Versteifungselemente können der Unterstützung der funktionsgemäßen Faltung der faltbaren Seitenwand dienen. Auch können sie vorgesehen sein, um eine Beschädigung der Plane in bestimmten Bereichen zu verhindern, welche durch einen Kontakt mit Gütern oder durch äußere Gewalt, beispielsweise durch einen beabsichtigten Einbruch, entstehen könnten.

Nach einer weiteren vorteilhaften Ausgestaltung der Erfindung ist das Dach des Aufbaus wenigstens an einer Seite mittels eines Kraftantriebs heb- und senkbar, wobei die obere Verlängerungsschiene mechanisch derart vom Dach entkoppelt ist, dass sie beim Heben und Senken des Daches nicht mit diesem mitbewegt wird. Dies ermöglicht eine maximale Ausnutzung des zur Verfügung stehenden Laderaums und ein einfacheres Be- und Entladen des Aufbaus. Zudem ist hierdurch eine komplexe Aufhängung der faltbaren Seitenwand an der oberen Schiene des Aufbaus nicht erforderlich, da die faltbare Seitenwand vor dem Anheben des Daches an der oberen Verlängerungsschiene angeordnet werden kann und somit die Aufhängung der faltbaren Seitenwand in diesem Zustand des Aufbaus nicht die Bewegbarkeit der Daches kompensieren muss.

Die Erfindung lässt sich sowohl bei neu hergestellten Aufbauten als auch als Nachrüstung bei bereits vorhandenen Aufbauten realisieren, was mit den oben genannten Vorteilen verbunden ist. Hierbei können verschiedenste Kombinationen der vorgenannten Ausgestaltungen verwirklicht sein.

Weitere Vorteile und Merkmale der vorliegenden Erfindung werden im Folgenden anhand der in den Figuren der beiliegenden Zeichnung gezeigten Ausführungsbeispiele näher erläutert. Dabei zeigen:
- Figur 1: eine Seitenansicht eines mit einem Ausführungsbeispiel für den erfindungsgemäßen Aufbau ausgestatteten Sattelaufliegers in einem für den Fahrbetrieb geeigneten Ausgangszustand,
- Figur 2: eine Seitenansicht des in Figur 1 gezeigten Sattelaufliegers mit in ihren funktionsgemäßen Stellungen befindlichen Verlängerungsschienen,
- Figur 3: eine Seitenansicht des in Figur 2 gezeigten Sattelaufliegers mit von den Verlängerungsschienen gehaltener, vollständig oder nahezu vollständig gefalteter Seitenwand,
- Figur 4: eine Ansicht des in Figur 3 gezeigten Sattelaufliegers in unterschiedlichen Zuständen von oben, und
- Figur 5: eine Seitenansicht des in Figur 4 gezeigten Sattelaufliegers mit angehobenem Dach.

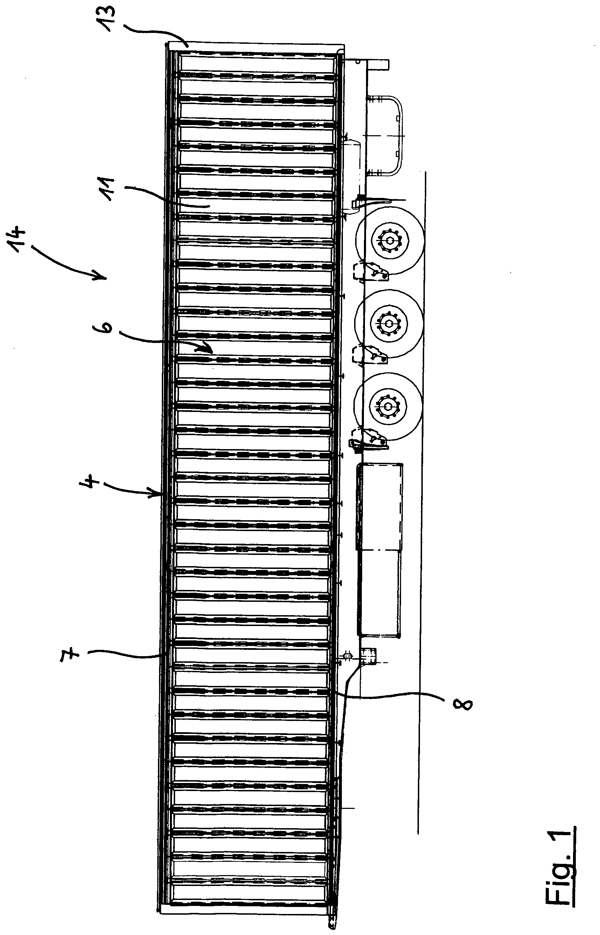

In Figur 1 ist ein Sattelauflieger 14 in einer Seitenansicht dargestellt, der mit einem Aufbau 4 zum Befördern von Gütern gemäß einer Ausführungsform der Erfindung versehen ist.

Der Aufbau 4 weist auf seiner dem Betrachter zugewandten und auf seiner dem Betrachter abgewandten Seite jeweils eine seitliche Verladeöffnung 5 auf, die in dem in Figur 1 gezeigten Zustand des Aufbaus 4 vollständig mit der faltbaren Seitenwand 6 geschlossen sind. Die gezeigte faltbare Seitenwand 6 ist an einer im oberen Bereich der seitlichen Verladeöffnung 5 angeordneten oberen Schiene 7 und einer im unteren Bereich der seitlichen Verladeöffnung 5 angeordneten unteren Schiene 8 zwischen der gezeigten vollständig entfalteten Stellung und einer vollständig gefalteten Stellung bewegbar gelagert.

Jede faltbare Seitenwand 6 weist formstabile Faltelemente 11 auf, die an den oberen Schienen 7 und unteren Schienen 8 bewegbar angeordnet und um nicht näher dargestellte vertikale Schwenkachsen schwenkbeweglich miteinander verbunden sind. Zudem weist jede faltbare Seitenwand 6 eine Plane auf, welche an den oberen Schienen 7 und gegebenenfalls den unteren Schienen 8 oder an den Faltelementen 11 aufgehängt und aus Übersichtlichkeitsgründen nicht näher dargestellt ist. Die Verladeöffnung 5, die obere Schiene 7 und die untere Schiene 8 erstrecken sich bis an das rechts dargestellte seitliche Ende des Aufbaus 4.

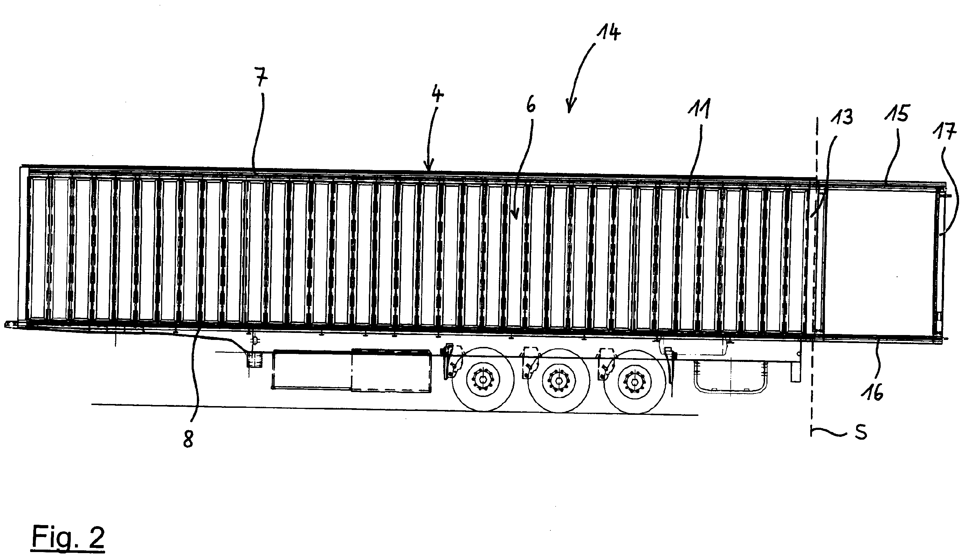

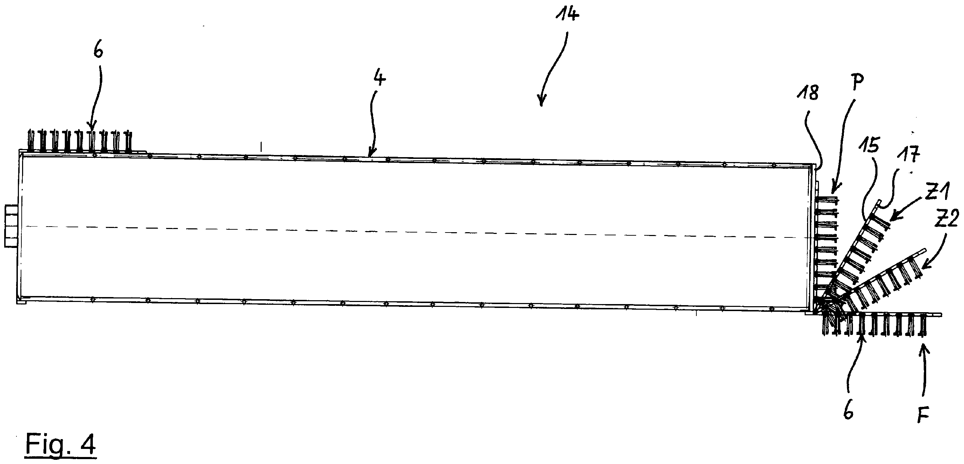

Figur 2 zeigt den in Figur 1 gezeigten Sattelauflieger 14, wobei eine obere Verlängerungsschiene 15 und eine untere Verlängerungsschiene 16 vorhanden sind, deren dem rechts gezeigten seitlichen Ende des Aufbaus 4 abgewandte Endabschnitte über ein vertikal ausgerichtetes Stabilisierungselement 17 miteinander verbunden sind. Die Verlängerungsschienen 15 und 16 sind derart schwenkbeweglich an dem rechts gezeigten seitlichen Ende des Aufbaus 4 angeordnet, dass sie die obere Schiene 7 und die untere Schiene 8 an dem rechts gezeigten seitlichen Ende des Aufbaus 4 verlängernd und fluchtend mit der oberen Schiene 7 und der unteren Schiene 8 ausgerichtet werden können, wie es in Figur 2 gezeigt ist. Hierzu sind die Verlängerungsschienen 15 und 16 um eine vertikale Schwenkachse S schwenkbar an dem seitlichen Ende des Aufbaus 4 angeordnet, indem die Verlängerungsschienen 15 und 16 um die vertikale Schwenkachse S schwenkbar mit einer an dem seitlichen Ende des Aufbaus 4 angeordneten Ecksäule 13 des Aufbaus 4 verbunden sind. Die Verschwenkbarkeit der Verlängerungsschienen 15 und 16 wird besser deutlich aus Figur 4.

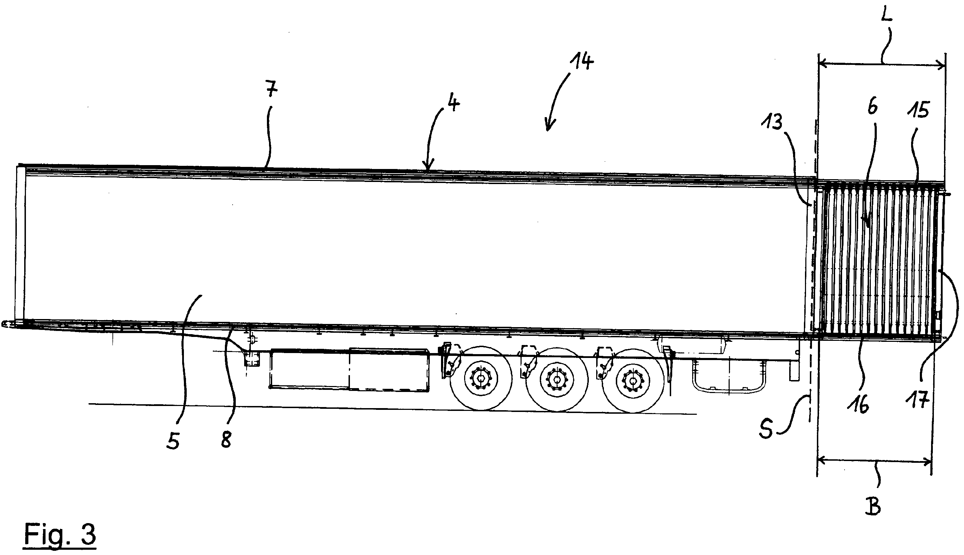

Figur 3 zeigt den in Figur 2 dargestellten Sattelauflieger 14 mit vollständig oder nahezu vollständig gefalteter Seitenwand 6, welche von den Verlängerungsschienen 15 und 16 gehalten wird. Wie zu erkennen ist, entspricht die Länge L der Verlängerungsschienen 15 und 16 zumindest der Breite B der faltbaren Seitenwand 6 in ihrer vollständig oder nahezu vollständig gefalteten Stellung. Die dem Betrachter zugewandte Verladeöffnung 5 ist vollständig freigegeben.

Figur 4 zeigt den in Figur 3 dargestellten Sattelauflieger 14 in verschiedenen Zuständen von oben. Die Verlängerungsschienen 15 und 16 sind derart schwenkbeweglich an dem seitlichen Ende des Aufbaus 4 angeordnet, dass sie in eine zu der weiteren, an das seitliche Ende des Aufbaus 4 angrenzenden Seitenwand 18 parallele Ruhestellung P bewegbar ist. Hierdurch lässt sich die faltbare Seitenwand 6 vollständig und platzsparend aus dem Bereich der Verladeöffnung 5 entfernen. Des Weiteren sind zwei Zwischenschwenkzustände Z1 und Z2 sowie die funktionsgemäße Stellung F gezeigt, wobei die funktionsgemäße Stellung F auch in Figur 3 gezeigt ist. Die faltbare Seitenwand 6 an der anderen Längsseite des Aufbaus 4 befindet sich in ihrer vollständig oder nahezu vollständig gefalteten Stellung und kann entsprechend der anderen faltbaren Seitenwand 6 an der links gezeigten Vorderseite des Aufbaus 4 angeordnet werden. Alternativ können beide faltbaren Seitenwände 6 an der Vorderseite und/oder der Rückseite des Aufbaus 4 entsprechend angeordnet werden.

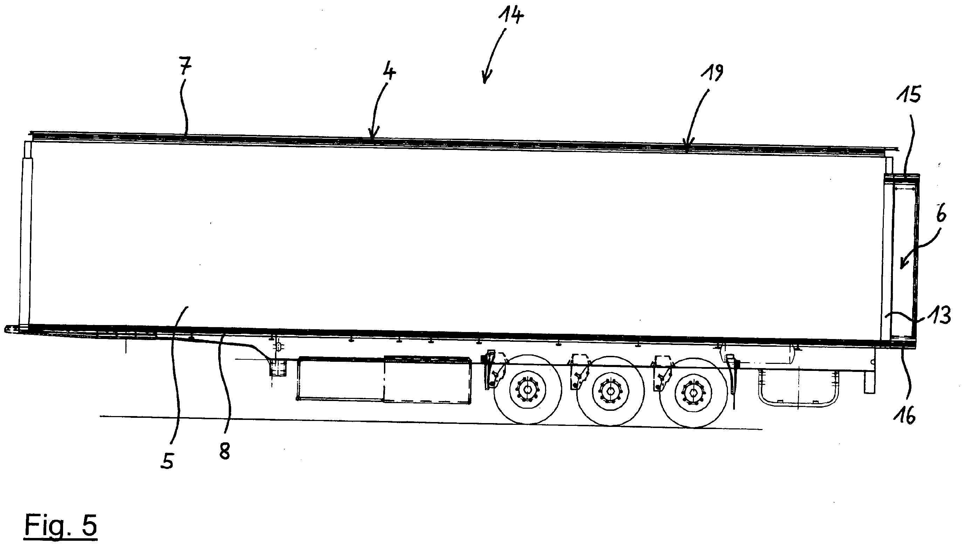

Figur 5 zeigt den in Figur 4 gezeigten Sattelauflieger 14, bei dem sich die Verlängerungsschienen 15 und 16 in der Stellung P befinden, wie sie in Figur 4 dargestellt ist. Zudem befindet sich das Dach 19 des Sattelaufliegers 14 in einer angehobenen Stellung, wobei das Anheben und Absenken des Daches 19 über einen nicht dargestellten Kraftantrieb erfolgt. Es ist zu erkennen, dass die obere Verlängerungsschiene 15 nicht mit dem Dach 19 angehoben worden ist, da die obere Verlängerungsschiene 15 mechanisch vom Dach 19 entkoppelt ist. Somit bewegt sich die obere Verlängerungsschiene 15 beim Heben und Senken des Daches 19 nicht mit diesem mit, was eine konstruktiv einfache und kostengünstige Ausgestaltung der Aufhängung der faltbaren Seitenwand 6 an der oberen Verlängerungsschiene 15 ermöglicht.

### Bezugszeichenliste:

- 4: Aufbau
- 5: Verladeöffnung
- 6: faltbare Seitenwand
- 7: obere Schiene
- 8: untere Schiene
- 11: Faltelement
- 13: Ecksäule
- 14: Sattelauflieger
- 15: obere Verlängerungsschiene
- 16: untere Verlängerungsschiene
- 17: Stabilisierungselement
- 18: Seitenwand
- 19: Dach
- B: Breite
- L: Länge
- S: Schwenkachse
- P: parallele Stellung
- F: funktionsgemäße Stellung
- Z1: Zwischenschwenkzustand
- Z2: Zwischenschwenkzustand

## Patentansprüche

1. Aufbau (4) zum Befördern von Gütern, aufweisend wenigstens eine seitliche Verladeöffnung (5) und eine faltbare Seitenwand (6), wobei die faltbare Seitenwand (6) zumindest an einer im oberen Bereich der seitlichen Verladeöffnung (5) angeordneten oberen Schiene (7) zwischen einer vollständig entfalteten Stellung und einer vollständig gefalteten Stellung bewegbar gelagert ist, wobei sich die Verladeöffnung (5) und die obere Schiene (7) zumindest bis an ein seitliches Ende des Aufbaus (4) erstrecken, wobei eine obere Verlängerungsschiene (15) vorhanden ist, die derart schwenkbeweglich an dem seitlichen Ende des Aufbaus (4) angeordnet ist, dass sie die obere Schiene (7) an dem seitlichen Ende des Aufbaus (4) verlängernd und fluchtend mit der oberen Schiene (7) ausgerichtet werden kann, und wobei die Länge (L) der oberen Verlängerungsschiene (15) zumindest der Breite (B) der faltbaren Seitenwand (6) in ihrer vollständig oder nahezu vollständig gefalteten Stellung entspricht,
**dadurch gekennzeichnet,**
**dass** im unteren Bereich der Verladeöffnung (5) eine untere Schiene (8) angeordnet ist, an der die faltbare Seitenwand (6) zwischen der vollständig entfalteten Stellung und der vollständig gefalteten Stellung bewegbar gelagert ist, wobei eine untere Verlängerungsschiene (16) vorhanden ist, die derart schwenkbeweglich an dem seitlichen Ende des Aufbaus (4) angeordnet ist, dass sie die untere Schiene (8) an dem seitlichen Ende des Aufbaus (4) verlängernd und fluchtend mit der unteren Schiene (8) ausgerichtet werden kann, wobei die Länge (L) der unteren Verlängerungsschiene (16) zumindest der Breite (B) der faltbaren Seitenwand (6) in ihrer vollständig oder nahezu vollständig gefalteten Stellung entspricht, und
**dass** die dem seitlichen Ende des Aufbaus (4) abgewandten Endabschnitte der oberen Verlängerungsschiene (15) und der unteren Verlängerungsschiene (16) über ein vertikal ausgerichtetes Stabilisierungselement (17) miteinander verbunden sind.

2. Aufbau (4) nach Anspruch 1, **dadurch gekennzeichnet, dass** die obere Verlängerungsschiene (15) und die untere Verlängerungsschiene (16) um eine vertikale Schwenkachse (S) schwenkbar an dem seitlichen Ende des Aufbaus (4) angeordnet sind.

3. Aufbau (4) nach Anspruch 2, **dadurch gekennzeichnet, dass** die obere Verlängerungsschiene (15) und die untere Verlängerungsschiene (16) um die vertikale Schwenkachse (S) schwenkbar mit einer an dem seitlichen Ende des Aufbaus (4) angeordneten Ecksäule (13) des Aufbaus (4) verbunden sind.

4. Aufbau (4) nach einem der Ansprüche 1 bis 3, **gekennzeichnet durch** Mittel zum Sichern der funktionsgemäßen Stellung der oberen Verlängerungsschiene (15), in der sie die obere Schiene (7) an dem seitlichen Ende des Aufbaus (4) verlängernd und fluchtend mit der oberen Schiene (7) ausgerichtet ist, und/oder **durch** Mittel zum Sichern der funktionsgemäßen Stellung der unteren Verlängerungsschiene (16), in der diese die untere Schiene (8) an dem seitlichen Ende des Aufbaus (4) verlängernd und fluchtend mit der unteren Schiene (8) ausgerichtet ist.

5. Aufbau (4) nach einem der Ansprüche 1 bis 4, **dadurch gekennzeichnet, dass** die obere Verlängerungsschiene (15) und die untere Verlängerungsschiene (16) derart schwenkbeweglich an dem seitlichen Ende des Aufbaus (4) angeordnet sind, dass sie in eine zu der weiteren, an das seitliche Ende des Aufbaus (4) angrenzenden Seitenwand (18) parallele Ruhestellung (P) bewegbar sind, und dass Mittel zum Sichern der Ruhestellung (P) der oberen Verlängerungsschiene (15) und/oder der unteren Verlängerungsschiene (16), in der sie parallel zu der weiteren, an das seitliche Ende des Aufbaus (4) angrenzenden Seitenwand (18) ausgerichtet sind, vorhanden sind.

6. Aufbau (4) nach einem der Ansprüche 1 bis 5, **gekennzeichnet durch** Mittel zum Sichern der vollständig oder nahezu vollständig gefalteten Stellung der an der oberen Verlängerungsschiene (15) und an der unteren Verlängerungsschiene (16) gehaltenen faltbaren Seitenwand (6).

7. Aufbau (4) nach einem der Ansprüche 1 bis 6, **dadurch gekennzeichnet, dass** das Dach (19) des Aufbaus (4) wenigstens an einer Seite mittels eines Kraftantriebs heb- und senkbar ist und dass die obere Verlängerungsschiene (15) mechanisch derart vom Dach (19) entkoppelt ist, dass sie beim Heben und Senken des Daches (19) nicht mit diesem mitbewegt wird.

## Claims

1. Superstructure (4) for conveying cargo, comprising at least one side loading port (5) and a folding side wall (6), said folding side wall (6) being mounted at least on an upper rail (7) situated in an upper area of the side loading port (5) for movement between a fully unfolded position and a fully folded position, with the loading port (5) and the upper rail (7) extending at least to a lateral end of said superstructure (4), with an upper extension rail (15) being mounted on the lateral end of said superstructure (4) for pivoting movement in such a manner that it can be aligned to extend the upper rail (7) at the lateral end of said superstructure (4) and to lie flush with the upper rail (7); and with the length (L) of the upper extension rail (15) corresponding at least to the width (B) of the folding lateral wall (6) in its fully or almost fully folded position,
**characterised in that**
a lower rail (8) is arranged in the lower area of said loading port (5), with the folding side wall (6) being mounted on the lower rail (8) for movement between the fully unfolded position and the fully folded position, with a lower extension rail (16) being mounted on the lateral end of said superstructure (4) for pivoting movement in such a manner that it can be aligned to extend the lower rail (8) at the lateral end of said superstructure (4) and to lie flush with the lower rail (8), with the length (L) of the lower extension rail (16) corresponding at least to the width (B) of the folding side wall (6) in its fully or almost fully folded position; and
that the end sections of the upper extension rail (15) and of the lower extension rail (16) that face away from the lateral end of the superstructure (4) are interconnected by a vertically oriented stabilising element (17).

2. The superstructure (4) according to Claim 1, **characterised in that** the upper extension rail (15) and the lower extension rail (16) are arranged on the lateral end of the superstructure (4) for pivoting movement around a vertical pivot axis (S).

3. The superstructure (4) according to Claim 2, **characterised in that** the upper extension rail (15) and the lower extension rail (16) are connected to a corner post (13) of the superstructure (4) for pivoting movement around the vertical pivot axis (S), with the corner post (13) being arranged on the lateral end of the superstructure (4).

4. The superstructure (4) according to one of Claims 1 to 3, **characterised by** means for securing the upper extension rail (15) in its functional position by aligning it so as to extend the upper rail (7) at the lateral end of the superstructure (4) and to lie flush with the upper rail (7), and/or by means for securing the lower extension rail (16) in its functional position by aligning it to extend the lower rail (8) at the lateral end of the superstructure (4) and to lie flush with the lower rail (8).

5. The superstructure (4) according to one of Claims 1 to 4, **characterised in that** the upper extension rail (15) and the lower extension rail (16) are arranged for pivoting movement on the lateral end of the superstructure (4) in such a manner that they are movable into a position of rest (P) parallel to the further side wall (18) bordering on the lateral end of the superstructure (4), and that means are present for securing the upper extension rail (15) and/or the lower extension rail (16) in their positions of rest (P) by aligning them parallel to the further side wall (18) bordering on the lateral end of the superstructure (4).

6. The superstructure (4) according to one of Claims 1 to 5, **characterised by** means for securing the folding side wall (6) in its fully or almost fully folded position as it is held on the upper extension rail (15) and on the lower extension rail (16).

7. The superstructure (4) according to one of Claims 1 to 6, **characterised in that** the top (19) of the superstructure (4) is adapted for being raised and lowered at least on one side by means of a power drive, and that the upper extension rail (15) is mechanically uncoupled from the top (19) in such a manner that it is not moved along with the top (19) when the top is raised and lowered.

## Revendications

1. Structure (4) pour le transport de biens, présentant au moins une ouverture de chargement (5) latérale et une paroi latérale (6) pliable, la paroi latérale (6) pliable étant montée mobile entre une position entièrement dépliée et une position entièrement pliée, au moins sur un rail supérieur (7) agencé dans la partie supérieure de l'ouverture de chargement (5) latérale, l'ouverture de chargement (5) et le rail supérieur (7) s'étendant au moins jusqu'à une extrémité latérale du structure (4), un rail de rallongement supérieur (15) étant présent, lequel est agencé de manière articulée à l'extrémité latérale du structure (4) de telle sorte à pouvoir être orienté en rallongement du rail supérieur (7) à l'extrémité latérale du structure (4) et dans le prolongement du rail supérieur (7), et la longueur (L) du rail de rallongement supérieur (15) correspondant au moins à la largeur (B) de la paroi latérale (6) pliable dans sa position entièrement ou quasiment entièrement pliée,
**caractérisé en ce**
**qu'**est agencé un rail inférieur (8) dans la partie inférieure de l'ouverture de chargement (5), auquel la paroi latérale (6) pliable est montée mobile entre la position entièrement dépliée et la position entièrement pliée, un rail de rallongement inférieur (16) étant présent, lequel est agencé de manière articulée à l'extrémité latérale du structure (4) de telle sorte à pouvoir être orienté en rallongement du rail inférieur (8) à l'extrémité latérale du structure (4) et dans l'allongement du rail inférieur (8), la longueur (L) du rail de rallongement inférieur (16) correspondant au moins à la largeur (B) de la paroi latérale (6) pliable dans sa position entièrement ou quasiment entièrement pliée, et
**que** les sections d'extrémité du rail de rallongement supérieur (15) et du rail de rallongement inférieur (16) à l'opposé de l'extrémité latérale du structure (4) sont reliées l'une à l'autre par une pièce de stabilisation (17) orientée à la verticale.

2. Structure (4) selon la revendication 1, **caractérisé en ce que** le rail de rallongement supérieur (15) et le rail de rallongement inférieur (16) sont agencés à l'extrémité latérale du structure (4) de manière articulable autour d'un axe de pivotement (S) vertical.

3. Structure (4) selon la revendication 2, **caractérisé en ce que** le rail de rallongement supérieur (15) et le rail de rallongement inférieur (16) sont reliés à un montant d'angle (13) du structure (4) agencé à l'extrémité latérale du structure (4), de manière articulable autour de l'axe de pivotement (S) vertical.

4. Structure (4) selon l'une des revendications 1 à 3, **caractérisé par** des moyens destinés à sécuriser la position fonctionnelle du rail de rallongement supérieur (15), dans laquelle il est orienté en rallongement du rail supérieur (7) à l'extrémité latérale du structure (4) et dans le prolongement dudit rail supérieur (7), et/ou par des moyens destinés à sécuriser la position fonctionnelle du rail de rallongement inférieur (16), dans laquelle celui-ci est orienté en rallongement du rail inférieur (8) à l'extrémité du structure (4) et dans le prolongement dudit rail inférieur (8).

5. Structure (4) selon l'une des revendications 1 à 4, **caractérisé en ce que** le rail de rallongement supérieur (15) et le rail de rallongement inférieur (16) sont agencés de manière articulée à l'extrémité latérale du structure (4) de telle sorte qu'ils sont mobiles dans une position de repos (P) parallèle à l'autre paroi latérale (18) attenante à l'extrémité latérale du structure (4), et qu'il y a présence de moyens destinés à sécuriser la position de repos (P) du rail de rallongement supérieur (15) et/ou du rail de rallongement inférieur (16), dans laquelle ils sont orientés parallèlement à l'autre paroi latérale (18) attenante à l'extrémité latérale du structure (4).

6. Structure (4) selon l'une des revendications 1 à 5, **caractérisé par** des moyens destinés à sécuriser la position entièrement ou quasiment entièrement pliée de la paroi latérale (6) pliable maintenue sur le rail de rallongement supérieur (15) et sur le rail de rallongement inférieur (16).

7. Structure (4) selon l'une des revendications 1 à 6, **caractérisé en ce que** le toit (19) du structure (4) peut être levé et rabaissé au moins sur un côté à l'aide d'un entraînement motorisé, et que le rail de rallongement supérieur (15) est découplé mécaniquement du toit (19) de telle sorte qu'il n'est pas déplacé en même temps que le toit (19) lorsque celui-ci est levé et rabaissé.
